# EUROPEAN PATENT APPLICATION

(11) **EP 4 694 512 A1**
(43) Date of publication of application: **11.02.2026**
(21) Application number: 24784156.2
(22) Date of filing: 28.03.2024
(51) Int. Cl.: H04W 72/541

(54) **COMMUNICATION METHOD AND RELATED COMMUNICATION APPARATUS**

(30) Priority: 06.04.2023 CN 202310412493
(71) Applicant: Huawei Technologies Co., Ltd., Shenzhen, Guangdong 518129 (CN)
(72) Inventor: LI, Jun, Shenzhen, Guangdong 518129 (CN); JIAO, Shurong, Shenzhen, Guangdong 518129 (CN); HUA, Meng, Shenzhen, Guangdong 518129 (CN)
(74) Representative: Gill Jennings & Every LLP
(86) International application number: PCT/CN2024/084336
(87) International publication number: WO 2024/208071

(57) **Abstract**

This application provides a communication method and a related communication apparatus. In the communication method in this application, in a flexible duplex mode, a terminal device reports, to a network device, information about a communication capability supported by the terminal device, and the network device configures and schedules a corresponding frequency domain resource based on the information about the communication capability, so that the frequency domain resource helps the terminal device receive a downlink signal, thereby improving downlink receiving performance of the terminal device, and avoiding increased design complexity and costs of the terminal device.

## Description

This application claims priority to Chinese Patent Application No. 202310412493.9, filed with the China National Intellectual Property Administration on April 6, 2023 and entitled "COMMUNICATION METHOD AND RELATED COMMUNICATION APPARATUS", which is incorporated herein by reference in its entirety.

### TECHNICAL FIELD

This application relates to the field of communication technologies, and in particular, to a communication method and a related communication apparatus.

### BACKGROUND

In a new radio (new radio, NR) system, in subband full duplex (subband full duplex, SBFD), which is a new duplex mode, full duplex communication may be implemented by obtaining non-overlapping uplink and downlink subbands through division in time division duplex (time division duplex, TDD), and performing data sending and receiving on the subbands respectively.

In SBFD, when a base station sends a downlink signal to a user equipment (user equipment, UE) by using a downlink subband (downlink subband, DL SB), the UE that receives the downlink signal may receive an uplink signal sent by another UE to the base station on an uplink subband (uplink subband, UL SB).

Consequently, the uplink signal sent by the another UE on the UL SB causes interference to the downlink signal sent by the base station, which affects downlink receiving performance of the UE.

### SUMMARY

This application provides a communication method and a related communication apparatus, to improve downlink receiving performance of a UE in a flexible duplex mode, and reduce implementation complexity and costs of the UE.

According to a first aspect, this application provides a communication method, applied to a terminal device, where the method includes: sending first information to a network device, where the first information includes at least one of the following information supported by the terminal device in a first duplex mode: radio frequency indicator information, filter information, capability level information, first duplex mode pattern information, or scheduling information, the first duplex mode is a mode in which simultaneous transmission of an uplink signal and a downlink signal can be performed in a first time unit, and the first time unit is a time unit of time division multiplexing; and receiving second information from the network device, where the second information indicates a frequency domain resource used for signal transmission in the first duplex mode.

In the method, the terminal device reports a communication capability of the terminal device in the first duplex mode by using the first information, to provide a basis for the network device to configure and schedule, in a targeted manner, the frequency domain resource used for communication with the terminal device. The frequency domain resource helps the terminal device receive a downlink signal.

Optionally, the radio frequency indicator information includes at least one of the following information: power of an interference signal, a bandwidth of an interference signal, a ratio of power of a downlink signal to power of an interference signal, or a throughput.

The first duplex mode pattern information includes information about a frequency domain resource used for uplink signal transmission, information about a frequency domain resource used for downlink signal transmission, and a frequency relationship between the frequency domain resource used for uplink signal transmission and the frequency domain resource used for downlink signal transmission.

The filter information includes at least one of the following information: whether a filter is supported, type information of the supported filter, or bandwidth information of the supported filter.

The capability level information indicates a capability level of the terminal device, and different capability levels correspond to different interference suppression capabilities.

The scheduling information indicates a frequency relationship between a frequency domain resource for downlink data during reception of the downlink data and a frequency domain resource used for uplink signal transmission.

The various items of information included in the first information can directly or indirectly reflect a downlink receiving capability of the terminal device.

In some implementations, the first duplex mode pattern information and/or the scheduling information have/has the following correspondence with the radio frequency indicator information:

When the first duplex mode pattern information indicates a first pattern, or the scheduling information indicates a first scheduling mode, the radio frequency indicator information indicates a first radio frequency indicator; or when the first duplex mode pattern information indicates a second pattern, or the scheduling information indicates a second scheduling mode, the radio frequency indicator information indicates a second radio frequency indicator, where a value of at least one piece of information in the first radio frequency indicator is not equal to a value of the information in the second radio frequency indicator, the first scheduling mode is a mode of transmission of a downlink signal by using one downlink subband, the second scheduling mode is a mode of transmission of a downlink signal by using two non-contiguous downlink subbands, the first pattern includes M downlink subbands, the second pattern includes N downlink subbands, M is not equal to N, and the downlink subband is used for downlink signal transmission.

There is an implicit correspondence between some information in the first information, and the terminal device may implicitly indicate other information by using one item of information, to avoid redundancy in the sent first information.

In some implementations, the method further includes: receiving third information from the network device, where the third information indicates a radio frequency indicator specified by the network device for the terminal device.

The terminal device supports a plurality of types of radio frequency indicators, and a specific radio frequency indicator specified by the network device has better adaptability to the frequency domain resource configured and scheduled by the network device, thereby helping improve downlink receiving performance of the terminal device.

Optionally, the terminal device measures interference on an uplink subband in a first time period, and measures interference on a downlink subband in a second time period, where duration of the first time period is greater than duration of the second time period.

In the first time period and the second time period, interference on a corresponding subband is measured through filter switching, thereby reducing design complexity and costs of the terminal device.

According to a second aspect, this application provides a communication method, applied to a network device, where the method includes: receiving first information from a terminal device, where the first information includes at least one of the following information supported by the terminal device in a first duplex mode: radio frequency indicator information, filter information, capability level information, first duplex mode pattern information, or scheduling information, the first duplex mode is a mode in which simultaneous transmission of an uplink signal and a downlink signal can be performed in a first time unit, and the first time unit is a time unit of time division multiplexing; and sending second information to the terminal device, where the second information indicates a frequency domain resource used for signal transmission in the first duplex mode.

The network device configures and schedules, based on information about a communication capability reported by the terminal device in the first information, the frequency domain resource used for communication with the terminal device, and indicates information about the frequency domain resource to the terminal device by using the second information.

Optionally, the radio frequency indicator information includes at least one of the following information: power of an interference signal, a bandwidth of an interference signal, a ratio of power of a downlink signal to power of an interference signal, or a throughput.

The first duplex mode pattern information includes information about a frequency domain resource used for uplink signal transmission, information about a frequency domain resource used for downlink signal transmission, and a frequency relationship between the frequency domain resource used for uplink signal transmission and the frequency domain resource used for downlink signal transmission.

The filter information includes at least one of the following information: whether a filter is supported, type information of the supported filter, or bandwidth information of the supported filter.

The capability level information indicates a capability level of the terminal device, and different capability levels correspond to different interference suppression capabilities.

The scheduling information indicates a frequency relationship between a frequency domain resource for downlink data during reception of the downlink data and a frequency domain resource used for uplink signal transmission.

Based on the various items of information in the first information, the network device can identify a communication capability corresponding to the terminal device.

In some implementations, the first duplex mode pattern information and/or the scheduling information have/has the following correspondence with the radio frequency indicator information: When the first duplex mode pattern information indicates a first pattern, or the scheduling information indicates a first scheduling mode, the radio frequency indicator information indicates a first radio frequency indicator; or when the first duplex mode pattern information indicates a second pattern, or the scheduling information indicates a second scheduling mode, the radio frequency indicator information indicates a second radio frequency indicator, where a value of at least one piece of information in the first radio frequency indicator is not equal to a value of the information in the second radio frequency indicator, the first scheduling mode is a mode of transmission of a downlink signal by using one downlink subband, the second scheduling mode is a mode of transmission of a downlink signal by using two non-contiguous downlink subbands, the first pattern includes M downlink subbands, the second pattern includes N downlink subbands, M is not equal to N, and the downlink subband is used for downlink signal transmission.

There is an implicit correspondence between some information in the first information, and the network device may identify, by using one item of information, other information implicitly indicated by the network device.

In some implementations, the method further includes: sending third information to the terminal device, where the third information indicates a radio frequency indicator specified by the network device for the terminal device.

The network device specifies a radio frequency indicator for the terminal device based on the first information, and the radio frequency indicator has better adaptability to the frequency domain resource configured and scheduled by the network device.

According to a third aspect, this application provides a communication apparatus, where the communication apparatus includes a functional module configured to implement any deployment method mentioned in the foregoing implementations. Optionally, each module may be implemented by software and/or hardware.

According to a fourth aspect, this application provides a communication apparatus, including a processor, where the processor is coupled to a memory, and may be configured to execute instructions in the memory, to implement the method in any one of the first aspect or the possible implementations of the first aspect. Optionally, the apparatus further includes the memory. Optionally, the apparatus further includes a communication interface, and the processor is coupled to the communication interface.

Optionally, the apparatus may be a terminal device, or may be a chip used in a terminal device.

According to a fifth aspect, this application provides a communication apparatus, including a processor, where the processor is coupled to a memory, and may be configured to execute instructions in the memory, to implement the method in any one of the second aspect or the possible implementations of the second aspect. Optionally, the apparatus further includes the memory. Optionally, the apparatus further includes a communication interface, and the processor is coupled to the communication interface.

Optionally, the apparatus may be a base station, a CU, or a DU, or may be a chip used in a base station, a CU, or a DU.

According to a sixth aspect, this application provides a chip, where the chip includes a processor, and the processor is coupled to a memory, and may be configured to execute instructions in the memory, to implement the method in any one of the possible implementations of the first aspect or the second aspect. Optionally, the chip further includes the memory.

According to a seventh aspect, this application provides a communication system, where the system includes the apparatus in the third aspect or the fourth aspect, and includes the apparatus in the fifth aspect.

According to an eighth aspect, this application provides a computer program product, including a computer program, where when the computer program is executed by a processor, the method in any one of the first aspect, the second aspect, or the possible implementations thereof is implemented.

According to a ninth aspect, this application provides a computer-readable medium, where the computer-readable medium stores program code for a device to execute, and the program code includes the method in any one of the first aspect, the second aspect, or the possible implementations thereof.

### BRIEF DESCRIPTION OF DRAWINGS

The accompanying drawings herein are incorporated into this specification and constitute a part of this specification, to show embodiments in accordance with this application, and are used, together with this specification, to explain the principle of this application.
FIG. 1 is a diagram of an architecture of a communication system to which an embodiment of this application is applied;
FIG. 2 is a diagram of structures of bandwidth parts for FDD and TDD;
FIG. 3 is a diagram of a structure of a bandwidth part in SBFD;
FIG. 4 is a diagram in which a UE 1 receives a downlink signal from a base station;
FIG. 5 is a diagram in which filters are configured to filter out interference signals in different SBFD patterns;
FIG. 6 is a flowchart of a communication method according to an embodiment of this application;
FIG. 7 is a flowchart of a communication method according to an embodiment of this application;
FIG. 8 is a diagram in which mismatch occurs between a BWP configured by a network device and a filter supported by a UE;
FIG. 9 is a diagram of a structure of a communication apparatus according to an embodiment of this application;
FIG. 10 is a diagram of a structure of a communication apparatus according to another embodiment of this application; and
FIG. 11 is a diagram of a structure of a communication apparatus according to still another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application for a person skilled in the art with reference to particular embodiments.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, the implementations are merely examples of apparatuses and methods that are described in the appended claims in detail and that are consistent with some aspects of this application.

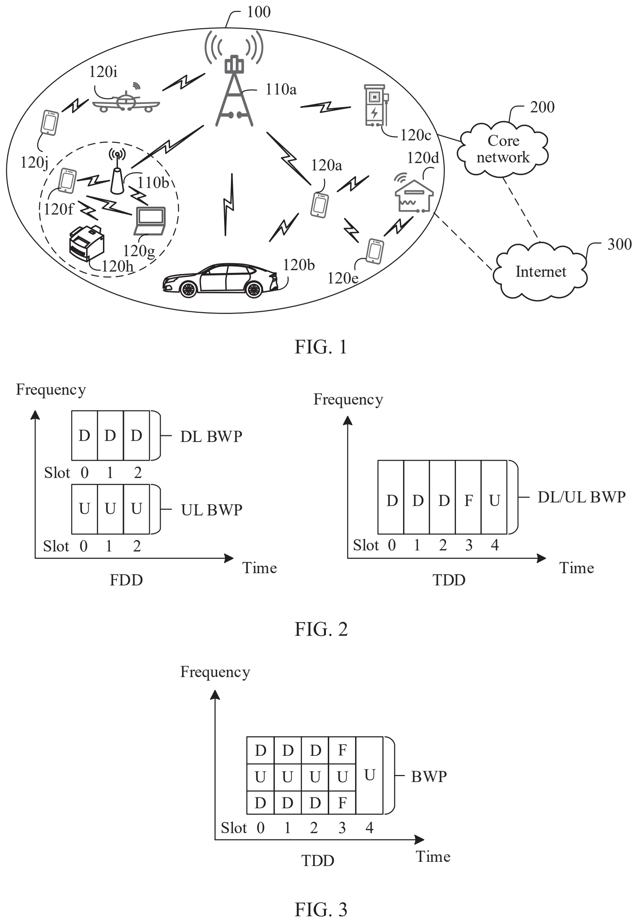

FIG. 1 is a diagram of an architecture of a communication system to which an embodiment of this application is applied. As shown in FIG. 1, the communication system includes a radio access network 100 and a core network 200. Optionally, the communication system may further include an internet 300. The radio access network 100 may include at least one radio access network device (for example, 110a and 110b in the figure), and may further include at least one terminal (for example, 120a to 120j in the figure). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. It may be understood that FIG. 1 is merely a diagram. The communication system may further include other network devices such as a wireless relay device and a wireless backhaul device, which are not shown in the figure.

The radio access network (wireless access network, RAN) device may be a device having a wireless transceiver function. In this embodiment of this application, the radio access network device may be a device that provides a wireless communication function service, is usually located on a network side, and includes but is not limited to: a next generation NodeB (gNodeB, gNB) in a 5th generation (5th generation, 5G) communication system, a next generation base station in a 6th generation (6th generation, 6G) mobile communication system, a base station in a future mobile communication system, an access node in a Wi-Fi system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home base station (for example, a home evolved NodeB or a home NodeB, HNB), a baseband unit (baseband unit, BBU), a transmission reception point (transmission reception point, TRP), a transmitting point (transmitting point, TP), a base transceiver station (base transceiver station, BTS), or the like. In a network structure, the access network device may include a central unit (central unit, CU) node, a distributed unit (distributed unit, DU) node, a RAN device including a CU node and a DU node, or a RAN device including a CU control plane node, a CU user plane node, and a DU node. The access network device provides a service for a cell. A terminal device communicates with a base station through a transmission resource (for example, a frequency domain resource or a spectrum resource) used by the cell. The cell may be a cell corresponding to the base station (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are applicable to providing a high-rate data transmission service. The radio access network device may be a macro base station (for example, 110a in FIG. 1), may be a micro base station or an indoor base station (for example, 110b in FIG. 1), or may be a relay node or a donor node, a device that provides a wireless communication service for a terminal device in a V2X communication system, a radio controller in a cloud radio access network (cloud radio access network, CRAN) scenario, a relay station, a vehicle-mounted device, a wearable device, a network device in a future evolved network, or the like. The access network device in this embodiment may alternatively be an open-radio access network (open-radio access network, O-RAN) device, and the O-RAN device may include an open-distributed unit (open-distributed unit, O-DU) and an open-central unit (open-central unit, O-CU). In this embodiment of this application, a base station function may be performed by a module (for example, a chip) in the base station, or may be performed by a control subsystem including the base station function. The control subsystem that includes the base station function herein may be a control center in the foregoing application scenarios such as a smart grid, industrial control, intelligent transportation, and a smart city. A specific technology and a specific device form that are used by the radio access network device are not limited in this embodiment of this application. For ease of description, the following uses an example in which a base station is used as the radio access network device for description.

A terminal may also be referred to as a terminal device, a user equipment (user equipment, UE), a mobile station (mobile station, MS), a mobile terminal (mobile terminal, MT), or the like, and may be an entity, for example, a mobile phone, on a user side, configured to receive or transmit a signal. The terminal device includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, a smart grid, smart furniture, smart office, a smart wearable, smart transportation, and a smart city. In this embodiment of this application, an apparatus configured to implement a terminal function may be a terminal, or may be an apparatus, for example, a chip system, a communication module, or a modem, that can support the terminal in implementing the function, where the apparatus may be installed in the terminal. In this embodiment of this application, the chip system may include a chip, or may include a chip and another discrete component. A specific technology and a specific device form that are used by the terminal device are not limited in this embodiment of this application.

The base station and the terminal may be at fixed positions, or may be movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in this embodiment of this application.

Optionally, roles of the base station and the terminal are relative, and the terminal may alternatively be configured to serve as the base station. For example, the terminal may serve as a scheduling entity that provides a sidelink signal between terminals in vehicle-to-everything (vehicle-to-everything, V2X), device-to-device (device-to-device, D2D), peer-to-peer (peer-to-peer, P2P), or the like. A helicopter or an uncrewed aerial vehicle 120i in the figure may be configured as a mobile base station. For a terminal 120j that accesses a radio access network 100 through 120i, a terminal 1201 is a base station; while for a base station 110a, 120i is a terminal, in other words, 110a and 120i communicate with each other based on a wireless air interface protocol. Certainly, communication between 110a and 120i may alternatively be performed based on an interface protocol between base stations. In this case, for 110a, 120i is also a base station. Therefore, both the base station and the terminal may be collectively referred to as a communication apparatus, 110a and 110b in the figure may be referred to as a communication apparatus having a base station function, and 120a to 120j in the figure may be referred to as a communication apparatus having a terminal function.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using a spectrum below 6 GHz and a spectrum above 6 GHz. A spectrum resource used for wireless communication is not limited in this embodiment of this application.

In this embodiment of this application, a time domain symbol may be an orthogonal frequency division multiplexing (orthogonal frequency division multiplexing, OFDM) symbol, a discrete Fourier transform-spread-OFDM (discrete Fourier transform-spread-OFDM, DFT-s-OFDM) symbol, or the like. Unless otherwise specified, all symbols in this embodiment of this application are time domain symbols.

In a new radio system, duplex modes of frequency division duplex (frequency division duplex, FDD) and time division duplex (time division duplex, TDD) are mainly adopted. FIG. 2 is a diagram of structures of bandwidth parts for FDD and TDD. In this application, "D" (downlink) represents being configured for downlink transmission, "U" (uplink) represents being configured for uplink transmission, and "F" (flexible) represents being flexibly configurable for uplink or downlink transmission. As shown in FIG. 2, in FDD, symmetric spectra are used to distinguish between uplink and downlink. In a slot slot 0, in FDD, uplink transmission may be performed through an uplink BWP, or downlink transmission may be performed through a downlink BWP. Therefore, FDD has a small continuous time-domain delay but a large bandwidth and low spectrum utilization. However, in TDD, different slots are assigned to be used for uplink or downlink. As shown in FIG. 2, in TDD, a slot slot 0 to a slot slot 2 are allocated to a downlink BWP and can be used only for downlink transmission (downlink symbols), a slot 4 is allocated to an uplink BWP and can be used only for uplink transmission (uplink symbols), and a slot 3 is a flexible slot that can be used for both uplink transmission and downlink transmission (flexible symbols), but cannot be simultaneously used for uplink and downlink transmission. TDD features high spectrum utilization but a long delay due to being discontinuous in time domain.

In consideration of limitations of the foregoing duplex mode, a flexible duplex mode is currently being explored in the industry. This duplex mode is also referred to as complementary TDD (complementary TDD, C-TDD), full duplex (full duplex), or subband full duplex (subband full duplex, SBFD). The following uniformly uses SBFD to describe the flexible duplex mode.

In SBFD, a base station may configure a frequency domain resource in a BWP. When a contiguous frequency domain segment in the BWP is used for uplink signal transmission, the part of frequency domain resource is an uplink frequency domain resource, that is, an uplink subband UL SB. Correspondingly, a contiguous frequency domain resource that is in the BWP and that is used for downlink signal transmission is a downlink frequency domain resource, that is, a downlink subband DL SB. A core idea of SBFD is to obtain non-overlapping uplink and downlink subbands through division in frequency domain, so that the base station can simultaneously perform receiving and sending on one time domain symbol. For a UE side, SBFD still uses a TDD mode. In some implementations, a UE can only perform either uplink or downlink transmission on one time domain symbol. In another implementation, a UE may simultaneously perform uplink and downlink transmission on one time domain symbol.

In this embodiment of this application, the downlink subband may be a contiguous frequency domain resource used for downlink transmission on one time domain symbol. The uplink subband may be a contiguous frequency domain resource used for uplink transmission on one time domain symbol. There may be a guard band between the downlink subband and the uplink subband. The downlink subband and the uplink subband may be on a same carrier, or may be on different carriers. For example, the downlink subband is all or a part of frequency domain resources in one BWP on one carrier, and the uplink subband is all or a part of frequency domain resources in one BWP on another carrier. When the downlink subband and the uplink subband are on a same carrier, the downlink subband and the uplink subband may be further on a same BWP, or may be on different BWPs. For example, the downlink subband is all or a part of frequency domain resources in one BWP on one carrier, and the uplink subband is all or a part of frequency domain resources in the same BWP or another BWP on the same carrier. The BWP may be an active BWP or an inactive BWP. Being contiguous in frequency domain means that resource blocks (resource blocks, RBs) or subcarriers in frequency domain are contiguous.

FIG. 3 is a diagram of a structure of a bandwidth part in SBFD. As shown in FIG. 3, a base station divides a BWP into two downlink subbands and one uplink subband in a slot 0. The base station may perform uplink transmission on an uplink subband, or may perform downlink transmission on a downlink subband. The foregoing transmission processes may be performed simultaneously in the slot 0. Compared with TDD, SBFD allows more uplink resources to be flexibly configured, thereby facilitating uplink coverage enhancement and capacity improvement.

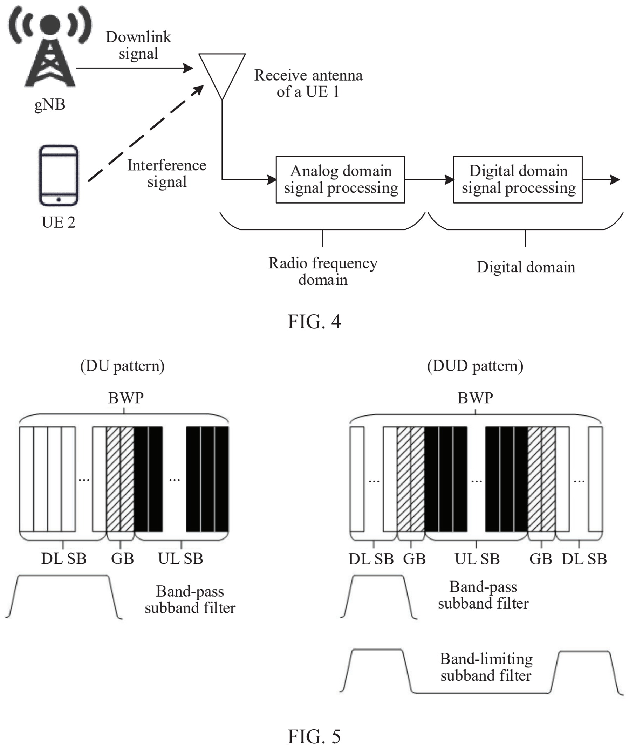

In SBFD, the base station sends a downlink signal to a UE 1 by using a downlink subband, and the base station receives, at a same moment by using an uplink subband, an uplink signal sent by a UE 2. FIG. 4 is a diagram in which a UE 1 receives a downlink signal from a base station. As shown in FIG. 4, the UE 1 receives, by using a receive antenna, the downlink signal sent by the base station, performs analog domain signal processing, for example, down-conversion, low noise amplification (low noise amplifier, LNA), automatic gain control (automatic gain control, AGC), and analog-to-digital conversion (analog-to-digital converter, ADC), in radio frequency domain, and then performs digital signal processing, including cyclic prefix removal, fast Fourier transform (fast Fourier transform, FFT), channel estimation, demodulation, and decoding, in digital domain. When the receive antenna of the UE 1 receives the downlink signal sent by the base station, because a UE 2 is sending an uplink signal to the base station by using an uplink subband, the receive antenna of the UE 1 inevitably receives the uplink signal sent by the UE 2. In this case, the UE 2 is an interfering end for the UE 1, and the uplink signal sent by the UE 2 is equivalent to an interference signal. It may be understood that a receiving architecture of the UE 1 in FIG. 4 is merely a simplified example.

Due to presence of the interference signal, performance of receiving the downlink signal by the UE 1 is affected. To reduce interference, the UE 1 may design a filter configured to filter out the interference signal on the uplink subband. FIG. 5 is a diagram in which filters are configured to filter out interference signals in different SBFD patterns. When a base station configures one uplink subband and one downlink subband in a BWP, and a frequency range corresponding to the downlink subband is greater than a frequency range corresponding to the downlink subband, a pattern (pattern) corresponding to the BWP is a DU pattern. When a base station configures one uplink subband and two downlink subbands in a BWP, and a frequency range corresponding to the uplink subband is between frequency ranges corresponding to the two downlink subbands, a pattern corresponding to the BWP is a DUD pattern. It may be understood that, to avoid mutual interference between an uplink subband and a downlink subband, a guard band (guard band, GB) is further configured between the two different subbands.

As shown in FIG. 5, a corresponding filter is designed based on a bandwidth of a downlink subband for a UE 1. In this application, this type of filter configured to filter out an interference signal on an uplink subband is referred to as a subband filter. In the DU pattern, a band-pass subband filter is designed for the UE 1, and a passband of the band-pass subband filter corresponds to the downlink subband in the DU pattern. In the DUD pattern, in addition to a band-pass subband filter, a band-limiting subband filter may be further designed for the UE 1. A passband of the band-limiting subband filter corresponds to the downlink subband in the DUD pattern, and a stopband of the band-limiting subband filter corresponds to the uplink subband in the DUD pattern.

Through the subband filter, the interference signal on the uplink subband can be filtered out on the stopband, and a downlink signal sent by a base station on a downlink subband can be received on the passband, thereby improving downlink receiving performance of the UE.

However, the base station may arbitrarily configure a pattern corresponding to a BWP and a bandwidth of an uplink subband/a downlink subband. When the subband filter designed for the UE cannot match the pattern configured by the base station, the downlink receiving performance of the UE is affected. If a large quantity of subband filters are designed for the UE for various configurations, complexity and costs of designing the subband filters for the UE are greatly increased.

To resolve the foregoing problem, this application provides a communication method and a communication apparatus, to improve downlink receiving performance of a UE in SBFD, and reduce implementation complexity and costs of the UE.

A technical concept of this application is as follows: The UE reports supported capability information in SBFD to a base station, and the base station configures and schedules, based on the capability information reported by the UE, a frequency domain resource for signal transmission with the UE, so that the frequency domain resource helps the UE receive a downlink signal and improves the downlink receiving performance of the UE. The capability information includes at least one of the following information: radio frequency indicator information, filter information, capability level information, pattern information, or scheduling information.

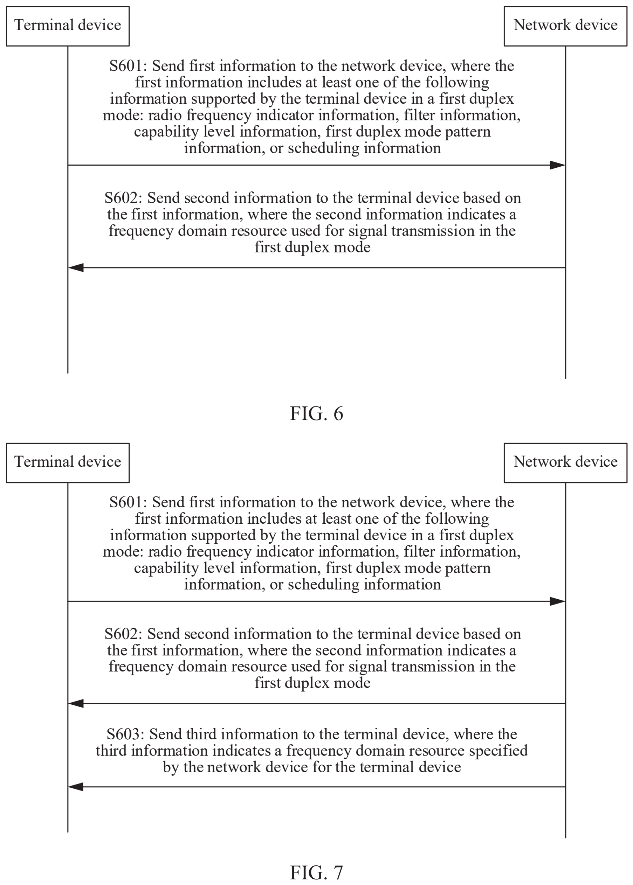

FIG. 6 is a flowchart of a communication method according to an embodiment of this application. As shown in FIG. 6, the communication method according to this embodiment of this application is applied to a flexible duplex mode, and the method includes the following steps.

S601: A terminal device sends first information to a network device, where the first information includes at least one of the following information supported by the terminal device in a first duplex mode: radio frequency indicator information, filter information, capability level information, first duplex mode pattern information, or scheduling information.

The first information may directly include the foregoing plurality of items of information. In some implementations, the first information may alternatively indirectly determine, by using association information of the foregoing information, information specifically supported by the terminal device in the first duplex mode.

In this step, in the first duplex mode, simultaneous transmission of an uplink signal and a downlink signal can be performed in a first time unit, and the first time unit is a time unit of time division multiplexing. For example, the first duplex mode may be subband full duplex SBFD. The first time unit may be a downlink symbol and/or an uplink symbol and/or a flexible symbol in a TDD mode.

The terminal device communicates with the network device by using a wireless air interface protocol in the first duplex mode. In the wireless air interface protocol, the radio frequency indicator information includes one or more of the following information: power of a downlink signal, a bandwidth of the downlink signal, power of an interference signal, a bandwidth of the interference signal, a ratio of the power of the downlink signal to power of an interference signal, or a throughput.

In this application, when receiving a downlink signal sent by a base station, the UE 1 may further receive an uplink signal sent by a UE 2 to the base station, and the uplink signal causes interference to downlink receiving of the UE 1.

In a possible implementation, the interference signal included in the radio frequency indicator information in this application includes an uplink signal for uplink transmission. For example, the interference signal includes an uplink signal of another UE in a local cell, or includes an uplink signal of another UE in a neighboring cell.

Specific parameters of the various items of information in the radio frequency indicator information may indicate a strict degree of formulating the radio frequency indicator, for example:

The power at which the downlink signal arrives at a receive antenna of the UE 1 is X dBm, the power at which the interference signal arrives at the receive antenna of the UE 1 is Y dBm, and the ratio X/Y of the power of the downlink signal received by the UE 1 to the power of the interference signal is greater than or equal to Z, where the ratio of the power of the downlink signal received by the UE 1 to the power of the interference signal may be understood as an adjacent subband selectivity (adjacent subband selectivity, ASS) indicator or an in-channel selectivity (In-channel selectivity, ICS) indicator. Z may have a plurality of different values, and the UE 1 may report one or more supported values to the base station. When the radio frequency indicator requires to be strictly formulated, Z may be defined as a large value, for example, 40 dB, and in this case, Z corresponds to an indicator A. When the radio frequency indicator requires to be loosely formulated, Z may be defined as a small value, for example, 30 dB, and in this case, Z corresponds to an indicator B. The UE 1 may report, to the base station, whether the indicator A or the indicator B is supported. If the UE 1 reports that the indicator A is supported, the first information includes the indicator A.

In consideration that the ASS indicator or the ICS indicator usually cannot be directly obtained through measurement, specific values of some related parameters (for example, including at least one of the following parameters: the power of the downlink signal, the bandwidth of the downlink signal, the power of the interference signal, or the bandwidth of the interference signal, which may be understood as a parameter set) may be defined, and then the throughput is measured based on these parameters to indirectly verify the foregoing indicator. For example, when power of an interference signal in a parameter set B is Y1 dBm, for example, Y1=-80, a throughput should be greater than or equal to 95% of a maximum throughput. When power of an interference signal in a parameter set A is Y2 dBm, for example, Y2=-75, a throughput should be greater than or equal to 95% of a maximum throughput. This is equivalent to that the parameter set A corresponds to the indicator A, and the parameter set B corresponds to the indicator B. The UE 1 may report, to the base station, which parameter set is supported, may report, to the base station, a value of a parameter in the specific set supported, and may perform reporting by using different tables. For example, power of an interference signal included in Table A is Y1 dBm, and power of an interference signal included in Table B is Y2 dBm. The UE reports Table A or Table B. For the throughput, the radio frequency indicator may require that the throughput throughput of the UE 1 be greater than or equal to 95% of the maximum throughput. Different ratios of the maximum throughput may be further defined based on the strict degree of formulating the radio frequency indicator, and the terminal device only needs to specify a supported specific indicator in the first information.

Optionally, the first duplex mode pattern information includes information about a frequency domain resource used for uplink signal transmission, information about a frequency domain resource used for downlink signal transmission, and a frequency relationship between the frequency domain resource used for uplink signal transmission and the frequency domain resource used for downlink signal transmission. Because SBFD may be used as an example of the first duplex mode, pattern information in SBFD is also applicable to representing the first duplex mode pattern information.

The information about the frequency domain resource used for uplink signal transmission may indicate a bandwidth of an uplink subband and/or a frequency domain position of an uplink subband and/or a quantity of uplink subbands. The information about the frequency domain resource used for downlink signal transmission may indicate a bandwidth of a downlink subband and/or a frequency domain position of a downlink subband and/or a quantity of downlink subbands. The frequency relationship between the frequency domain resource used for uplink signal transmission and the frequency domain resource used for downlink signal transmission may indicate a relationship between a frequency range of the uplink subband and a frequency range of the downlink subband. For example, the quantity of uplink subbands is equal to 1, the quantity of downlink subbands is equal to 1, and a first duplex mode pattern may include a UD pattern and/or a DU pattern. The UD pattern and the DU pattern may be considered as a same type of pattern, and a difference lies in that, in the UD pattern, a frequency range corresponding to a downlink subband is lower than a frequency range corresponding to an uplink subband, that is, a highest frequency of the downlink subband is less than or equal to a lowest frequency of the uplink subband. However, in the DU pattern, a frequency range corresponding to a downlink subband is greater than a frequency range corresponding to an uplink subband, that is, a lowest frequency of the downlink subband is greater than or equal to a highest frequency of the uplink subband. The first duplex mode pattern may further include a UDU pattern, to be specific, the quantity of uplink subbands is equal to 2, and the quantity of downlink subbands is equal to 1. In the UDU pattern, two uplink subbands and one downlink subband are configured, and a frequency range corresponding to the downlink subband is between frequency ranges corresponding to the two uplink subbands. The first duplex mode pattern may further include a DUD pattern, to be specific, the quantity of uplink subbands is equal to 1, and the quantity of downlink subbands is equal to 2. In the DUD pattern, a frequency range corresponding to the uplink subband is between frequency ranges corresponding to the two downlink subbands.

In a possible implementation, the filter information includes at least one of the following information: whether a filter is supported, type information of the supported filter, or bandwidth information of the supported filter. In this embodiment, the filter refers to a subband filter, and specifically, when a signal on a downlink subband is received, an interference signal on an uplink subband may be filtered out through the filter. Therefore, that the terminal device uses a conventional filter may be understood as the following: When a signal on a downlink subband is received, the terminal device cannot filter out an interference signal on an uplink subband, and corresponding filter information in the first information is that the filter is not supported, which may also be understood as that the subband filter is not supported.

The subband filter is usually classified into a band-pass subband filter and a band-limiting subband filter. Therefore, the type information of the supported filter is that the band-pass subband filter is supported or the band-limiting subband filter is supported. The band-pass subband filter refers to a filter that allows a signal (which may be understood as a passband) on one subband (for example, the downlink subband) to pass through, while attenuating a signal on another subband (for example, the uplink subband) to a low level (which may be understood as a stopband). The band-limiting subband filter refers to a filter that allows a signal (which may be understood as a passband) on a plurality of subbands (for example, two non-contiguous downlink subbands) to pass through, while attenuating a signal on another subband (for example, an uplink subband, where the uplink subband is located in a middle of the two non-contiguous downlink subbands) to a low level (which may be understood as a stopband).

When the terminal device supports the band-pass subband filter, the bandwidth information of the supported filter indicates a bandwidth of the band-pass subband filter, which may be understood as a passband bandwidth. The passband bandwidth of the band-pass subband filter is determined based on a channel bandwidth supported by the terminal device. For example, if the terminal device reports, by using signaling channelBWs-DL, that channel bandwidths of 100 MHz, 80 MHz, 50 MHz, and 40 MHz are supported, the passband bandwidth of the band-pass subband filter can only be one or more corresponding values in the foregoing 100 MHz, 80 MHz, 50 MHz, and 40 MHz, that is, the channel bandwidth supported by the terminal device is reused as a bandwidth indicated by the bandwidth information of the supported filter in the first information. In this case, a bitmap may indicate the bandwidth of the supported filter. The bitmap includes four bits, and each bit corresponds to one channel bandwidth supported by the terminal device. Alternatively, the bandwidth information of the supported filter is directly indicated by using a bitmap, and a bit in the bitmap is in one-to-one correspondence with one or more values in channel bandwidths {5, 10, 15, 20, 25, 30, 35, 40, 45, 50, 60, 70, 80, 90, 100} MHz. For example, 10 bits in the bitmap are in one-to-one correspondence with {10, 15, 20, 25, 30, 40, 45, 50, 60, 100} MHz.

Optionally, the passband bandwidth of the band-pass subband filter may alternatively be determined based on a subband bandwidth preset in a protocol. The passband bandwidth of the band-pass subband filter corresponds to a part or all of values in the preset subband bandwidth. It should be noted that the passband bandwidth may alternatively be represented by a physical resource block (physical resource block, PRB).

When the terminal device supports the band-limiting subband filter, the bandwidth information of the supported filter indicates a total bandwidth of the band-limiting subband filter and/or a band-limiting bandwidth of the band-limiting subband filter. If the bandwidth information of the supported filter indicates only the total bandwidth, the band-limiting bandwidth may be a default value, for example, be a quarter of the total bandwidth by default. If the bandwidth information of the supported filter indicates only the band-limiting bandwidth, the total bandwidth may be a default value, or the total bandwidth may be a channel bandwidth. The bandwidth information of the supported filter may indicate total bandwidths and/or band-limiting bandwidths of a plurality of band-limiting subband filters. To be specific, the bandwidth information of the supported filter indicates one or more indexes, and each index corresponds to a bandwidth, including a total bandwidth and/or a band-limiting bandwidth, of one band-limiting subband filter.

In some implementations, the bandwidth information of the supported filter may further indicate that the band-limiting subband filter is center-limited, in other words, a center frequency of the band-limiting bandwidth is consistent with a center frequency of the total bandwidth. If the bandwidth information of the supported filter indicates that the band-limiting subband filter is not center-limited, a position of a center frequency of the band-limiting bandwidth needs to be further indicated, for example, an offset value of a center of the band-limiting bandwidth relative to a center of the total bandwidth needs to be further indicated.

In some implementations, the scheduling information indicates a frequency relationship between a frequency domain resource of a downlink signal scheduled by the network device and the frequency domain resource used for uplink signal transmission. In other words, the scheduling information indicates a relationship between a frequency range corresponding to scheduled downlink data and a frequency range corresponding to an uplink subband when the network device schedules downlink data transmission.

For example, when the scheduling information indicates that the downlink data scheduled by the network device is on one downlink subband, it is equivalent to that the scheduling information indicates that the network device can transmit the downlink data only on one downlink subband. In this application, the scheduling mode is referred to as unilateral scheduling, and a frequency range corresponding to the downlink subband is less than or greater than a frequency range corresponding to an uplink subband. When the scheduling information indicates that the downlink data scheduled by the network device is on two downlink subbands, and frequency ranges corresponding to the two downlink subbands are respectively on two sides of a frequency range corresponding to an uplink subband, which corresponds to the DUD pattern, it is equivalent to that the scheduling information indicates that the network device can perform downlink data transmission on the two downlink subbands on the two sides of the uplink subband. In this application, the scheduling mode is referred to as bilateral scheduling. The downlink data transmission may specifically include downlink data transmission on a physical downlink shared channel (physical downlink shared channel, PDSCH) and/or a physical downlink control channel (PDCCH, physical downlink control channel). It may be understood that the scheduling information essentially indicates that the terminal device supports the unilateral scheduling or the bilateral scheduling.

Optionally, the capability level information indicates a capability level of the terminal device, and different capability levels correspond to strength of an interference suppression capability of the terminal device. The capability level information in the first information may directly indicate a high capability level or a low capability level. In some implementations, the first information may further carry an index value of the capability level information. For example, index values of the capability level information are 0 and 1. An index value of 0 corresponds to the high capability level, and it may be determined, by using the index value of 0, that the terminal device corresponds to the high capability level; and an index value of 1 corresponds to the low capability level, and it may be determined, by using the index value of 0, that the terminal device corresponds to the low capability level.

The various items of information included in the first information can directly or indirectly reflect a downlink receiving capability of the terminal device.

It should be noted that there is an implicit correspondence between some information included in the first information. To be specific, when receiving an item of information, the network device may determine, by using the information, other information supported by the terminal device. In an example, when the first duplex mode pattern information indicates that a pattern is the DU pattern, the UD pattern, or the UDU pattern, or when the scheduling information actually indicates that the terminal device supports the unilateral scheduling, there is implicit correspondence to that the radio frequency indicator information indicates that the terminal device supports a first radio frequency indicator. When the first duplex mode pattern information indicates that a pattern is the DUD pattern, or when the scheduling information actually indicates that the terminal device supports the bilateral scheduling, there is implicit correspondence to that the radio frequency indicator information indicates that the terminal device supports a second radio frequency indicator. A parameter value of at least one piece of information in the first radio frequency indicator is different from a parameter value of corresponding information in the second radio frequency indicator. That is, different pattern information and/or different scheduling information correspond/corresponds to different radio frequency indicator information.

In some implementations, when the capability level information indicates that the capability level of the terminal device is high, it not only indicates that the terminal device has a strong interference suppression capability, but may also indicate, by using an implicit correspondence, that the terminal device supports the subband filter. Alternatively, there is a correspondence between the capability level information and the radio frequency indicator information. When the capability level is high, there is implicit correspondence to that the radio frequency indicator information indicates that the terminal device supports the second radio frequency indicator. When the capability level is low, there is implicit correspondence to that the radio frequency indicator information indicates that the terminal device supports the first radio frequency indicator. The parameter value of at least one piece of information in the first radio frequency indicator is different from the parameter value of corresponding information in the second radio frequency indicator

Optionally, there is also an implicit correspondence between the radio frequency indicator information and the filter information. In an example, if the ASS indicator indicated in the radio frequency indicator information is large, which may be understood as that the radio frequency indicator is strictly formulated, the corresponding filter information indicates that the terminal device supports the subband filter.

S602: The network device sends second information to the terminal device based on the first information, where the second information indicates a frequency domain resource used for signal transmission in the first duplex mode.

After receiving the first information sent by the terminal device, the network device configures and schedules, during communication transmission with the terminal device, a frequency domain resource required for signal transmission. This may specifically include configuration of a pattern format, a bandwidth of an uplink subband, and a bandwidth of a downlink subband, and scheduling of a corresponding downlink subband for downlink transmission. The foregoing configuration and scheduling information is indicated by using the second information.

For example, the first duplex mode pattern information sent by the UE to the network device indicates that the UE supports the DU pattern, and the network device configures a pattern as the corresponding DU pattern.

It should be noted that the network device may receive first information sent by a plurality of UEs within a coverage area. For example, first duplex mode pattern information sent by the UE 1 to the network device indicates that the UE 1 supports the DU pattern, and first duplex mode pattern information sent by the UE 2 to the network device indicates that the UE 2 supports the DUD pattern and the UD pattern. Because both the DU pattern and the DUD pattern have the downlink subband with the corresponding frequency range greater than the frequency range of the uplink subband, to ensure downlink receiving performance of the UE 1 and the UE 2, the network device configures a pattern as the DU pattern. It may be understood that, when the network device receives the first information sent by the plurality of UEs, a pattern format finally configured by the network device needs to ensure downlink receiving performance of most UEs.

If the scheduling information sent by the UE to the network device indicates that the terminal device supports the bilateral scheduling, the network device may configure the DUD pattern. If the UE supports the unilateral scheduling, but the network device still configures the DUD pattern, during the unilateral scheduling, the network device may schedule a PDSCH with a higher-order modulation and coding scheme (modulation and coding scheme, MCS) for downlink data transmission. If the filter information sent by the UE to the network device is that the filter is not supported, the network device needs to avoid scheduling uplink data on an uplink subband, to avoid interference to downlink of the UE.

It may be understood that essence of configuring and scheduling, by the network device, a frequency domain resource for communication transmission with the terminal device is to enable the frequency domain resource to be more helpful for the terminal device to receive a downlink signal.

In this embodiment, the first information sent by the terminal device indicates various items of capability information supported by the terminal device in the first duplex mode, and the network device configures and schedules, in a targeted manner based on the first information, the frequency domain resource used for communication with the terminal device, and indicates corresponding frequency domain resource information to the terminal device by using the second information, thereby improving downlink receiving performance of the terminal device and reducing corresponding design costs and complexity of the terminal device.

In some implementations, when the radio frequency indicator information sent by the terminal device indicates that the terminal device supports a plurality of types of radio frequency indicators, the network device further needs to recommend or specify a radio frequency indicator used by the terminal device during actual communication. As shown in S603 in FIG. 7, the network device may further send third information to the terminal device, where the third information indicates a radio frequency indicator specified by the network device for the terminal device. Similarly, when the bandwidth information of the supported filter sent by the terminal device includes a plurality of types of bandwidths, the network device further needs to recommend or specify a bandwidth of the subband filter used by the terminal device during actual communication.

In some implementations, when the filter information sent by the terminal device indicates that the terminal device supports a plurality of types of subband filters, the network device further needs to recommend or specify a subband filter used by the terminal device during actual communication. In addition, the network device may further recommend or specify whether the terminal device uses a subband filter. When the network device specifies that the terminal device uses a subband filter, the network device may specify by default that a most proximate filter is used. The most proximate filter may be understood as a subband filter whose passband bandwidth is slightly greater than a bandwidth of a downlink subband for the first duplex mode pattern configured for the base station.

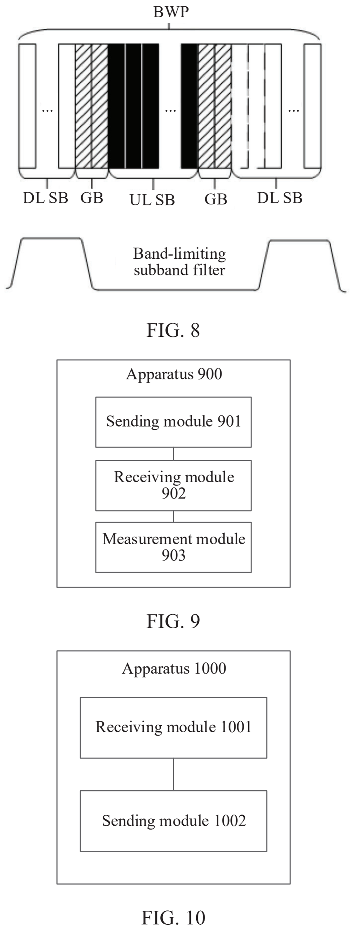

It may be learned from the foregoing embodiments that the network device may receive the first information sent by the plurality of UEs within the coverage area. Because the first information sent by the plurality of UEs includes different content, in other words, the plurality of UEs indicate different capability information of the plurality of UEs, mismatch mismatch may occur between the frequency domain resource configured by the network device for signal transmission and the filter reported by the UE. FIG. 8 is a diagram in which mismatch mismatch occurs between a BWP configured by a network device and a filter supported by a UE. As shown in FIG. 8, because the mismatch occurs between the BWP configured by the network device and a band-limiting subband filter supported by the UE, a dashed line part of a right-side downlink subband, that is, a frequency range corresponding to a resource block, falls within a band-limiting bandwidth of the band-limiting subband filter, and downlink data on the RB is filtered out by the band-limiting subband filter, in some implementations, the network device does not schedule the RB for downlink data transmission. Optionally, a terminal device may alternatively not receive downlink data on the RB.

By identifying a difference between a configured pattern and bandwidth information of a filter reported by the terminal device, the network device may accurately schedule a resource block on a downlink subband for downlink data transmission, thereby improving downlink receiving performance of the UE.

An objective of the foregoing embodiment is to filter out an interference signal on an uplink subband, and improve a downlink receiving capability of the UE. During communication between the network device and the terminal device, the interference signal on the uplink subband further needs to be measured, and a quantity of symbols used for measurement represents duration corresponding to a measurement window. This application provides an embodiment. In this embodiment, a UE measures interference on an uplink subband by using a conventional filter, and a subband filter measures interference on a downlink subband. Therefore, some switching time is required when the UE switches between the two filters. A measurement window on the uplink subband is a first measurement window, and may be understood as a first time period. A measurement window on the downlink subband is a second measurement window, and may be understood as a second time period. Due to presence of the switching time, the first measurement window includes more symbols used for measurement, and therefore, duration of the first time period corresponding to the first measurement window is greater than duration of the second time period corresponding to the second measurement window. That is, the duration of the first time period is greater than the duration of the second time period, the first time period is used by the UE to measure the interference on the uplink subband, and the second time period is used by the UE to measure the interference on the downlink subband.

In this embodiment, detection of the interference signal is implemented by filter switching, thereby avoiding increased complexity and costs of the UE.

FIG. 9 is a diagram of a structure of a communication apparatus according to an embodiment of this application. As shown in FIG. 9, the apparatus 900 in this embodiment may include: a sending module 901, a receiving module 902, and a measurement module 903. The apparatus 900 may be configured to implement an operation implemented by the terminal device in the method shown in FIG. 6 or FIG. 7. For example, the sending module 901 may be configured to send first information to a network device, where the first information includes at least one of the following information supported by the terminal device in a first duplex mode: radio frequency indicator information, filter information, capability level information, first duplex mode pattern information, or scheduling information, the first duplex mode is a mode in which simultaneous transmission of an uplink signal and a downlink signal can be performed in a first time unit, and the first time unit is a time unit of time division multiplexing.

The receiving module 902 may be configured to receive second information from the network device, where the second information indicates a frequency domain resource used for signal transmission in the first duplex mode.

Optionally, the receiving module 902 may be further configured to receive third information from the network device, where the third information indicates a radio frequency indicator specified by the network device for the terminal device.

The measurement module 903 may be configured to measure interference on an uplink subband in a first time period, and measure interference on a downlink subband in a second time period, where duration of the first time period is greater than duration of the second time period.

FIG. 10 is a diagram of a structure of a communication apparatus according to another embodiment of this application. As shown in FIG. 10, the apparatus 1000 in this embodiment may include: a receiving module 1001 and a sending module 1002. The apparatus 1000 may be configured to implement an operation implemented by the network device in the method shown in FIG. 6 or FIG. 7.

For example, the receiving module 1001 may be configured to receive first information from a terminal device, where the first information includes at least one of the following information supported by the terminal device in a first duplex mode: radio frequency indicator information, filter information, capability level information, first duplex mode pattern information, or scheduling information, the first duplex mode is a mode in which simultaneous transmission of an uplink signal and a downlink signal can be performed in a first time unit, and the first time unit is a time unit of time division multiplexing.

The sending module 1002 may be configured to send second information to the terminal device, where the second information indicates a frequency domain resource used for signal transmission in the first duplex mode.

Optionally, the sending module 1002 may be further configured to send third information to the terminal device, where the third information indicates a radio frequency indicator specified by the network device for the terminal device.

It should be understood that the apparatus 900 and the apparatus 1000 are implemented in a form of a functional module. The term "module" may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 900 and the apparatus 1000 have functions of implementing corresponding procedures and/or steps in the foregoing method embodiments. The foregoing functions may be implemented by hardware, or may be implemented by hardware by executing corresponding software. The hardware or the software includes one or more modules corresponding to the function.

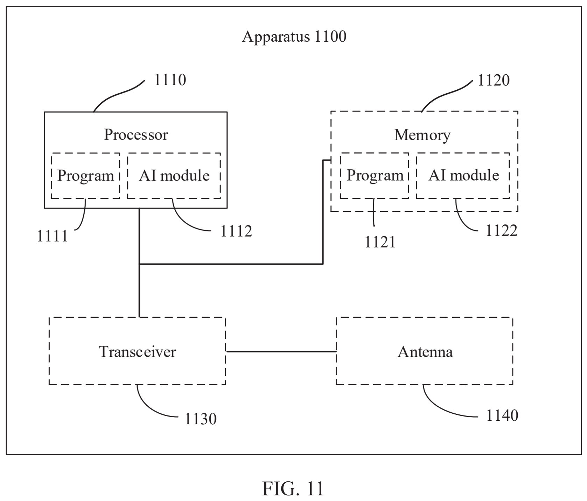

FIG. 11 is a diagram of a structure of a communication apparatus according to still another embodiment of this application. It may be understood that the apparatus 1100 includes means in necessary forms, such as modules, units, elements, circuits, or interfaces, which are appropriately configured together to implement the solution. The apparatus 1100 may be the terminal device or the network device in FIG. 1, or may be a component (for example, a chip) in these devices, and is configured to perform the method performed by the terminal device or the network device in any one of the foregoing methods.

The communication apparatus 1100 includes one or more processors 1110. The processor 1110 may be a general-purpose processor, a dedicated processor, or the like. For example, the processor may be a baseband processor or a central processing unit. The baseband processor may be configured to process a communication protocol and communication data. The central processing unit may be configured to control the communication apparatus (for example, a terminal device, a network device, or a chip), to execute a software program and process data of the software program.

Optionally, in a design, the processor 1110 may include a program 1111 (which may also be referred to as code or instructions sometimes), and the program 1111 may be run on the processor 1110, to enable the apparatus 1100 to perform the method performed by the terminal device or the network device in the foregoing embodiments.

Optionally, the apparatus 1100 may include one or more memories 1120. The memory 1120 may be a read-only memory (read-only memory, ROM), a static storage device, a dynamic storage device, or a random access memory (random access memory, RAM). The memory 1120 stores a program 1121 (which may also be referred to as code or instructions sometimes), and the program 1121 may be run on the processor 1110, to enable the apparatus 1100 to perform the method performed by the terminal device or the network device in the foregoing embodiments.

Optionally, the processor 1110 and/or the memory 1120 may include AI modules 1112 and 1122, and the AI module is configured to implement an AI-related function. The AI module may be implemented by software, hardware, or a combination of software and hardware. For example, the AI module may include a radio access network intelligent controller (RAN intelligent controller, RIC) module. For example, the AI module may be a near-real-time RIC or a non-real-time RIC.

Optionally, the apparatus 1100 may include a transceiver 1130. The transceiver 1130 is configured to process received and sent signals, where the processing may specifically include: performing analog domain filtering on uplink and downlink signals, performing power amplification on the uplink and downlink signals, performing demodulation and decoding on the downlink signal, and performing encoding and modulation on the uplink signal.

Optionally, the apparatus 1100 may include an antenna 1140. The antenna 1140 is configured to receive a radio wave from space, convert the radio wave into a downlink signal, and send the downlink signal to the transceiver 1130, or convert an uplink signal from the transceiver 1130 into a radio wave, and transmit the radio wave to space.

An embodiment of this application provides a chip. The chip includes a processor. The processor is configured to invoke a computer program in a memory, to execute the technical solutions in the foregoing embodiments. Implementation principles and technical effects thereof are similar to those of the foregoing related embodiments. Details are not described herein again.

An embodiment of this application further provides a computer-readable storage medium. The computer-readable storage medium stores computer instructions. When a processor executes the computer instructions, the steps performed by the terminal device or the network device in the methods in the foregoing embodiments are implemented.

An embodiment of this application further provides a computer program product, including computer instructions. When the computer instructions are executed by a processor, the steps performed by the terminal device or the network device in the methods in the foregoing embodiments are implemented.

It should be noted that the modules or components shown in the foregoing embodiments may be one or more integrated circuits, for example, one or more application-specific integrated circuits, one or more microprocessors, or one or more field programmable gate arrays, configured to implement the foregoing methods. For another example, when one of the foregoing modules is implemented in a form in which a processing element invokes program code, the processing element may be a general-purpose processor, for example, a central processing unit, or another processor, for example, a controller, that can invoke program code. For another example, these modules may be integrated together and implemented in a form of a system-on-a-chip (system-on-a-chip, SoC).

All or some of the foregoing embodiments may be implemented by software, hardware, firmware, software modules or any combination thereof. When software is used to implement embodiments, all or a part of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive Solid-State Drive (SSD)), or the like.

A person skilled in the art can easily figure out another implementation solution of this application after considering this specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and embodiments are merely considered as examples, and the actual scope and spirit of this application are pointed out by the following claims.

It should be understood that this application is not limited to the accurate structures that are described in the foregoing and that are shown in the accompanying drawings, and modifications and changes may be made without departing from the scope of this application. The scope of this application is limited only by the appended claims.

## Claims

1. A communication method, applied to a terminal device, wherein the method comprises:
sending first information to a network device, wherein the first information comprises at least one of the following information supported by the terminal device in a first duplex mode: radio frequency indicator information, filter information, capability level information, first duplex mode pattern information, or scheduling information, the first duplex mode is a mode in which simultaneous transmission of an uplink signal and a downlink signal can be performed in a first time unit, and the first time unit is a time unit of time division multiplexing; and
receiving second information from the network device, wherein the second information indicates a frequency domain resource used for signal transmission in the first duplex mode.

2. The method according to claim 1, wherein the radio frequency indicator information comprises at least one of the following information: power of an interference signal, a bandwidth of an interference signal, a ratio of power of a downlink signal to power of an interference signal, or a throughput.

3. The method according to claim 1, wherein the first duplex mode pattern information comprises information about a frequency domain resource used for uplink signal transmission, information about a frequency domain resource used for downlink signal transmission, and a frequency relationship between the frequency domain resource used for uplink signal transmission and the frequency domain resource used for downlink signal transmission.

4. The method according to claim 1, wherein the filter information comprises at least one of the following information: whether a filter is supported, type information of the supported filter, or bandwidth information of the supported filter.

5. The method according to claim 1, wherein the capability level information indicates a capability level of the terminal device, and different capability levels correspond to different interference suppression capabilities.

6. The method according to claim 1, wherein the scheduling information indicates a frequency relationship between a frequency domain resource for downlink data during reception of the downlink data and a frequency domain resource used for uplink signal transmission.

7. The method according to claim 1, wherein the first duplex mode pattern information and/or the scheduling information have/has the following correspondence with the radio frequency indicator information:
when the first duplex mode pattern information indicates a first pattern, or the scheduling information indicates a first scheduling mode, the radio frequency indicator information indicates a first radio frequency indicator; or when the first duplex mode pattern information indicates a second pattern, or the scheduling information indicates a second scheduling mode, the radio frequency indicator information indicates a second radio frequency indicator, wherein a value of at least one piece of information in the first radio frequency indicator is not equal to a value of the information in the second radio frequency indicator, the first scheduling mode is a mode of transmission of a downlink signal by using one downlink subband, the second scheduling mode is a mode of transmission of a downlink signal by using two non-contiguous downlink subbands, the first pattern comprises M downlink subbands, the second pattern comprises N downlink subbands, M is not equal to N, and the downlink subband is used for downlink signal transmission.

8. The method according to any one of claims 1 to 7, wherein the method further comprises:
receiving third information from the network device, wherein the third information indicates a radio frequency indicator specified by the network device for the terminal device.

9. The method according to any one of claims 1 to 8, wherein interference on an uplink subband is measured in a first time period, interference on a downlink subband is measured in a second time period, wherein duration of the first time period is greater than duration of the second time period.

10. A communication method, applied to a network device, wherein the method comprises:
receiving first information from a terminal device, wherein the first information comprises at least one of the following information supported by the terminal device in a first duplex mode: radio frequency indicator information, filter information, capability level information, first duplex mode pattern information, or scheduling information, the first duplex mode is a mode in which simultaneous transmission of an uplink signal and a downlink signal can be performed in a first time unit, and the first time unit is a time unit of time division multiplexing; and
sending second information to the terminal device, wherein the second information indicates a frequency domain resource used for signal transmission in the first duplex mode.

11. The method according to claim 10, wherein the radio frequency indicator information comprises at least one of the following information: power of an interference signal, a bandwidth of an interference signal, a ratio of power of a downlink signal to power of an interference signal, or a throughput.

12. The method according to claim 10, wherein the first duplex mode pattern information comprises information about a frequency domain resource used for uplink signal transmission, information about a frequency domain resource used for downlink signal transmission, and a frequency relationship between the frequency domain resource used for uplink signal transmission and the frequency domain resource used for downlink signal transmission.

13. The method according to claim 10, wherein the filter information comprises at least one of the following information: whether a filter is supported, type information of the supported filter, or bandwidth information of the supported filter.

14. The method according to claim 10, wherein the capability level information indicates a capability level of the terminal device, and different capability levels correspond to different interference suppression capabilities.

15. The method according to claim 10, wherein the scheduling information indicates a frequency relationship between a frequency domain resource for downlink data during reception of the downlink data and a frequency domain resource used for uplink signal transmission.

16. The method according to claim 10, wherein the first duplex mode pattern information and/or the scheduling information have/has the following correspondence with the radio frequency indicator information:
when the first duplex mode pattern information indicates a first pattern, or the scheduling information indicates a first scheduling mode, the radio frequency indicator information indicates a first radio frequency indicator; or when the first duplex mode pattern information indicates a second pattern, or the scheduling information indicates a second scheduling mode, the radio frequency indicator information indicates a second radio frequency indicator, wherein a value of at least one piece of information in the first radio frequency indicator is not equal to a value of the information in the second radio frequency indicator, the first scheduling mode is a mode of transmission of a downlink signal by using one downlink subband, the second scheduling mode is a mode of transmission of a downlink signal by using two non-contiguous downlink subbands, the first pattern comprises M downlink subbands, the second pattern comprises N downlink subbands, M is not equal to N, and the downlink subband is used for downlink signal transmission.

17. The method according to any one of claims 10 to 16, wherein the method further comprises:
sending third information to the terminal device, wherein the third information indicates a radio frequency indicator specified by the network device for the terminal device.

18. A communication apparatus, wherein the communication apparatus comprises a functional module configured to implement the communication method according to any one of claims 1 to 9, or comprises a functional module configured to implement the communication method according to any one of claims 10 to 17.

19. A chip, comprising a processor and a memory, wherein
the memory stores computer-executable instructions; and
the processor executes the computer-executable instructions stored in the memory, to enable the chip to perform the communication method according to any one of claims 1 to 9 or the communication method according to any one of claims 10 to 17.

20. A communication system, comprising a first communication apparatus and a second communication apparatus, wherein the first communication apparatus is configured to perform the communication method according to any one of claims 1 to 9, and the second communication apparatus is configured to perform the communication method according to any one of claims 10 to 17.

21. A computer-readable storage medium, wherein the computer-readable storage medium stores computer-executable instructions, and when the computer-executable instructions are executed by a processor, the communication method according to any one of claims 1 to 9 or any one of claims 10 to 17 is implemented.

22. A computer program product, comprising a computer program, wherein when the computer program is executed by a processor, the communication method according to any one of claims 1 to 9 or any one of claims 10 to 17 is implemented.
